# EUROPEAN PATENT APPLICATION

(11) **EP 0 931 447 A1**
(43) Date of publication of application: **28.07.1999**
(21) Application number: 99300338.3
(22) Date of filing: 19.01.1999
(51) Int. Cl.: A01D 43/10

(54) **Crop conditioner**

(30) Priority: 22.01.1998 GB 9801236
(71) Applicant: KVERNELAND TAARUP A/S, 5300 Kerteminde (DK)
(72) Inventor: Jorgensen, Bjarne, Kverneland Taarup AS, 5300 Kerteminde (DK)
(74) Representative: Orr, William McLean

(57) **Abstract**

An agricultural machine (10) for conditioning a mown crop supplied in at least one stream (13) to the machine, in which the machine is intended to be mounted behind a propelling vehicle in order to apply a working action to the mown crop supplied thereto, so as to condition the crop, prior to discharging the conditioned crop on to the ground, and in which the machine comprises: a frame; a rotatable conditioning device (14) extending transversely of the direction of travel P and rotatably mounted on the frame to rotate about an axis which extends generally parallel to the surface of the ground over which the machine is travelling, said conditioner device (14) having working elements (15) extending outwardly of said axis and operative to make working contact with the crop when supplied thereto; and, a stationary guiding device (17) mounted on the frame and arranged to guide mown crop (13) into working contact with the working elements (15) of the conditioning device (14);
characterised in that the guiding device (17) includes a diverting arrangement (18) which is operative to distribute the mown crop (13) laterally of the direction of travel P so as to be received substantially throughout the length of the conditioning device (14).

## Description

This invention relates to an agricultural machine for conditioning a mown crop, and which includes a rotatable conditioning device which is operative to apply a mechanical working action to the outer surface of the crop to improve the conditioning of the crop.

The invention has been developed primarily in connection with the conditioning of mown grass, so as to speed-up the drying process and thereby allow subsequent crop handling equipment to be used sooner. Furthermore, it is desirable to reduce the length of the necessary drying time in which the conditioned crop is lying on the ground and is losing moisture content, until the grass reaches required proportion of dry matter content.

In the formation of silage from conditioned grass, the dry matter content has to be controlled within set limits, and the longer the length of the drying time, the greater the chance of the quality of the silage being impaired by adverse weather conditions e.g. sudden showers of rain falling on partly dried and conditioned crop lying on the ground.

With currently available crop conditioners, the operations of mowing, conditioning, drying and then lifting of the crop usually runs into two separate working days i.e. with exposure of the crop lying on the ground to overnight weather conditions, which will include, at the very least, wetting with overnight dew, and with consequent risk of reduction in quality of silage. In the formation of silage it should be borne in mind that deviation of the dry matter content outside desired limits i.e. too wet or too dry, can result in loss of quality of silage formation.

Examples of known conditioning devices are disclosed in Danish patent No 150362, in which conditioning of the crop is effected between a rotating conditioning component and a co-operating holding component. This co-operation can be achieved in a number of different ways.

In one example, the conditioning equipment consists of a rotatable brush having relatively soft bristles, but in another example the conditioning component comprises a rotor on which are mounted relatively stiff or rigid radially projecting crop engaging elements or tines. The co-operating holding component can be designed either as a stationary element having stiff projecting elements which extend towards the conditioning component, or alternatively the holding component can take the form of a rotating unit rotating with, or against the conditioning component.

Crop conditioners can be supplied as a piece of separate equipment to a mower, so that two separate operations must take place i.e. first the standing crop of grass must be cut and then deposited in swaths on the ground by the mower, and subsequently the crop conditioner is used to pick-up the swaths, to "condition" the grass, and then return the grass to the field for further drying.

Alternatively, a crop conditioner can be integrated with a mower to form a single piece of equipment, which is able to cut a standing crop, apply a conditioning action to the cut crop, and then deposit the conditioned crop in swaths on the field for required drying. After required drying has been completed, the swaths can then be picked-up by a baler, or a forage storage wagon.

Traditional designs of mowec (having a longitudinally reciprocating blade) are pulled behind a tractor with the blade extending perpendicular to the forward direction of travel, and in which the blade cuts a standing crop of grass and deposits the cut grass behind the blade in a row having a width which is approximately the same as the length of the blade.

However, disc and drum type mowers are now used to a much greater extent, and which comprise a series of separate mower discs spaced apart along a cutter bar, and each rotating about a generally upright axis. The discs are arranged in co-operating pairs which rotate in relatively opposite directions, and a typical cutter bar can have two or more e.g. eight mower discs which comprise four co-operating pairs of discs.

Each mower disc has outwardly extending cutter knives or blades to cut the grass, and in the case of drum type mowers, each disc has an upstanding generally cylindrical drum.

By virtue of the opposite rotation of the discs of each co-operating pair, the standing crop of grass in front of each pair of discs is cut by the outwardly extending blades or knives on the outer peripheries of the discs, and the cut grass is then guided to pass through a narrow space defined between the discs of each pair. Therefore, the mown grass is discharged rearwardly of the cutter bar in narrow streams, and which is then deposited in swaths on the ground for drying purposes when a mowing machine only is used. The size and guidance of the swaths may be determined by use of adjustable baffles. Subsequent conditioning of the crop may then take place using a separate conditioner, and which picks-up the swaths, when partly dried, applies a "conditioning" action to the picked-up material, and then returns the conditioned material into further swaths on the ground for further drying if required.

Alternatively, in the case of an integrated mower / conditioner, the separate (narrow) streams of grass issuing rearwardly from the cutter bar are guided to the rotary conditioner and which conditions the grass in co-operation with the co-operating stationary holding or guiding components.

Bearing in mind that a rotary conditioner extends transversely of the path of travel and has (a) in the case of an integrated machine a length approximately the same as the length of the cutter bar or (b) in the case of a separate machine will have a length greater than the width of the swath or swaths which it is going to condition, only a part of the effective working surface of the conditioner is utilised.

A rotary conditioner usually has a central driveshaft, and outwardly extending conditioning elements which are driven by the shaft such that the tips of the elements define a generally cylindrical working or conditioning surface. The conditioning elements may comprise so-called Y tines, or may be formed by outwardly extending bristles of a brush type conditioner.

Given that the grass to be conditioned is supplied to the cylindrical conditioning surface in separate narrow streams, this has three disadvantages:
(a) less than 100% of the conditioning surface is utilised in order to condition the grass;
(b) the narrow, but dense, streams of grass exert excessive drag load between each stream of grass and the stationary guiding component and the tips of the rotary conditioning element; and,
(c) by concentration of the grass into narrow dense streams, this means that the streams can be relatively thick, and comprising a central core portion, and relatively opposite surface layer portions, and with risk that only the opposite surface portions will be "worked on" by the surface of the guiding component and by the tips of the conditioner element, and therefore at least part of the central core portion may not undergo any significant conditioning.

The invention therefore seeks, by simple means, to improve the distribution of a nown crop through a crop conditioning machine, so that better and more uniform conditioning can be achieved.

According to the invention there is provided an agricultural machine for conditioning a mown crop supplied in at least one stream to the machine, which is narrower than the overall width of the machine, in which the machine is intended to be mounted behind a propelling vehicle in order to apply a working action to the mown crop so as to condition the crop, prior to discharging the conditioned crop onto the ground, and in which the machine comprises:
a frame;
a rotatable conditioning device extending transversely of the direction of travel and rotatably mounted on the frame to rotate about an axis which is generally parallel to the surface of the ground over which the machine is travelling, said conditioning device having working elements extending outwardly of said axis and being operative to make working contact with the crop when supplied thereto; and,
a stationary guiding device mounted on the frame and arranged to guide mown crop into working contact with the working elements of the conditioning device:
characterised in that the guiding device includes a diverting arrangement which is operative to distribute the mown crop laterally of the direction of travel so as to be received substantially throughout the length of the conditioning device.

Therefore, the mown crop will normally be supplied to the machine in more than one stream (having been mown by a disc or drum type mower), and in which the combined width of the streams will be less than the effective working length of the conditioning device, but by virtue of the diverting arrangement the streams are spread-out laterally so as to be distributed substantially uniformly to the tips of the working elements on the conditioning device.

This achieves (a) more efficient utilisation of the working or conditioning surface; and, (b) reduces the thickness of the stream of grass supplied to the conditioner whereby (1) frictional dragforces will be reduced and (2) more of the grass will be exposed to working action.

Preferabiy, the conditioning device comprises a rotor having rigid tines extending outwardly of the axis of the rotor e.g. so-called Y-tines.

The stationary guiding device may comprise a simple guide plate extending over the conditioning device, and the diverting arrangement may comprise simple shaped guides arranged on the underside of the plate, generally in line with the direction of rearward discharge of the streams of mown crop, such diverting arrangements acting to spread the mown crop laterally throughout the cylindrical surface defined by the rotating tips of the conditioning device.

Each shaped guide may comprise a V-shaped guide.

To provide an additional conditioning action, it is preferred to mount a second conditioning device on the frame, so as to receive partly conditioned grass from the first conditioning device, and the second conditioning device also being a rotatable device extending throughout the width of the machine.

The stationary guiding device may extend also over the second conditioning device, and preferably a second diverting arrangement is provided on the underside of the guiding device to further spread the mown crop laterally.

The second diverting arrangement may comprise laterally spaced arrangements of profiled ribs on the underside of the guide plate, each arrangement being in line to receive and to guide a respective stream of mown crop, though other arrangements are possible.

The second conditioning device may comprise a cylindrical brush having outwardly extending bristles.

An agricultural machine according to the invention may comprise a self-contained piece of equipment, operative to carry out conditioning on previously mown swaths of crop lying on the ground. Alternatively, a machine according to the invention may be integrated with a disc or drum type mower.

A preferred embodiment of agricultural machine according to the invention, for conditioning a mown crop, will now be described in detail, by way of example only, with reference to the accompanying drawings, in which:
Figure 1 is a side view of an integrated mower / conditioner, incorporating an agricultural machine according to the invention; and,
Figure 2 is a schematic plan view of the essential operating components of the machine shown in Figure 1.

Referring now to the drawings, there will now be described, by way of example only, the integration of an agricultural machine for conditioning a mown crop, into a combined mower / conditioning machine for mowing a standing crop, such as grass, clover and lucerne.

However, it should be understood that the invention may be applied to a crop conditioner on its own, as a separate piece of equipment, and which is used subsequently to pick-up swaths of mown crop, having been deposited on the ground by a mower.

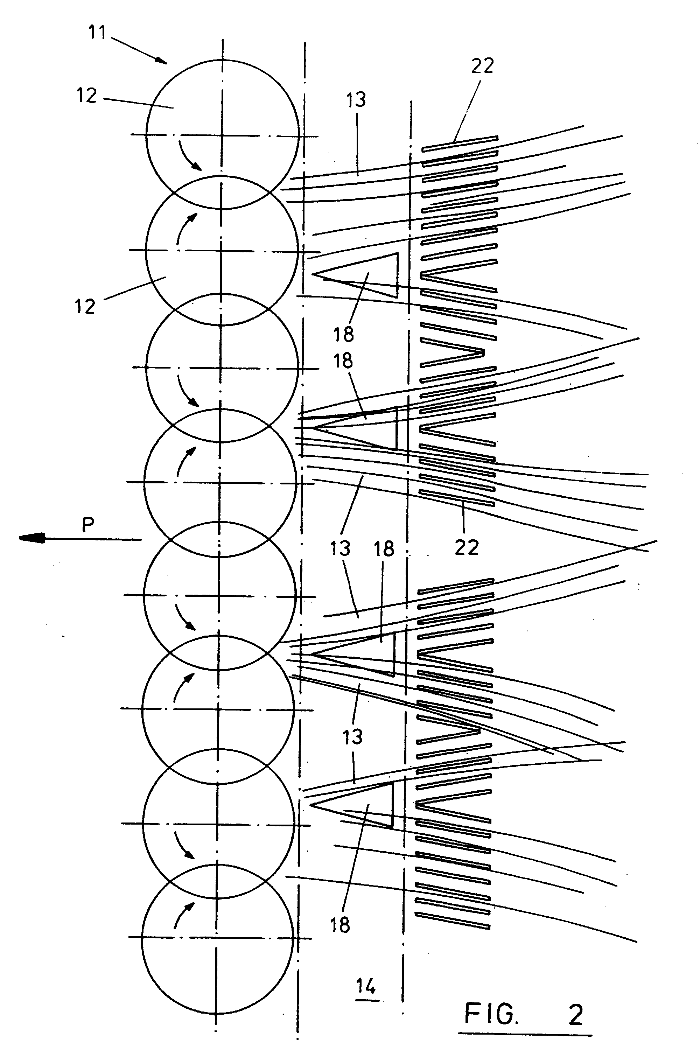

An agricultural machine according to the invention is therefore designated generally by the reference 10, and this is an integrated machine comprising a mower which is provided with a number of laterally spaced mower discs, arranged at suitable spacings along a cutter bar, and which comprise co-operating pairs of mower discs. As shown in Figure 2, the cutter bar 11 has eight mower discs 12, arranged along its length, and in which co-operating pairs of discs 12 rotate in relatively opposite directions. In the case of a drum type of mower, each disc 12 has an upstanding cylindrical guide, to assist in the guidance of mown crop rearwardly between the pairs of adjacent discs.

The cutter bar 11 extends generally perpendicular to the forward direction of travel, shown by arrow P, and the machine 10 will be mounted behind a propelling vehicle, (usually a tractor), and can apply, in a single operation, a mowing action to cut a standing crop, and then apply a working action on the mown crop so as to condition the crop, prior to discharging the conditioned crop onto the ground.

The eight mower discs 12 shown in Figure 2 comprise, as referred to above, four co-operating pairs, and therefore each pair of discs forms a rearwardly discharging stream of mown grass, as shown by reference 13 in Figure 2. Therefore, having regard to the overall length of the cutter bar 11, it will be apparent that a standing crop which is cut undergoes separation. into four narrow streams 13, which will be more densely packed, than would be the case for a known reciprocating blade type of mower, where the mown crop falls onto the ground directly behind the blade, and extending substantially throughout the length of the blade.

Therefore, as can be seen from Figure 2, the combined widths of the four separate streams of mown crop 13 is less than the overall length of the cutter bar 11.

With existing mower / conditioners, the four separate streams of mown crop 13 are then guided to a rotary conditioner, which acts in co-operation with a stationary holding or guiding component, and the rotation of the working elements of the conditioner, via its tips, applies a working action to the waxy outer layers of the crop, so as to "bruise" and / or perforate the outer layer, thereby allowing internal moisture to escape, and promoting drying of the conditioned crop after it has been returned to the ground.

The machine 10 according to the invention has at least one rotatable conditioning device, which extends transversely of the direction of travel P, and which is rotatably mounted on the frame of the machine so as to rotate about an axis which extends generally parallel to the surface of the ground over which the machine 10 is travelling, in which the conditioning device has working elements extending outwardly of the axis and operative to make working contact with the crop when supplied thereto.

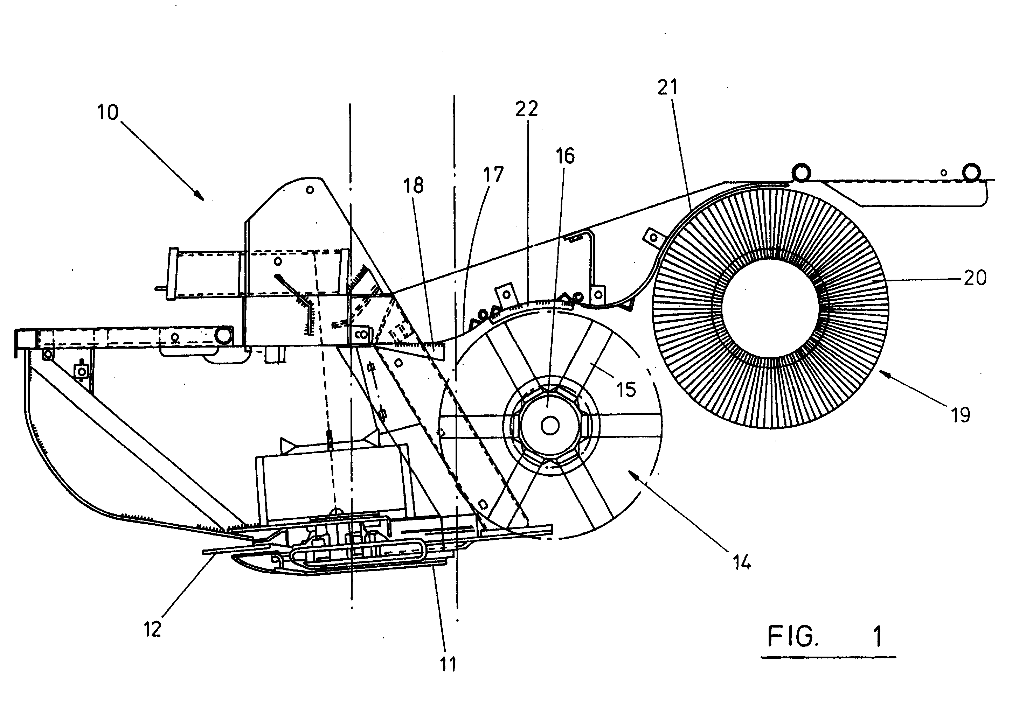

As shown in Figure 1, a first rotatable conditioning device 14 extends transversely of the direction of travel P, and is rotatably mounted on the frame, and has outwardly extending working elements 15 comprising so-called Y tines, which are rigidly mounted on a central rotor 16, and which are operative to make working contact with the crop when supplied thereto.

A stationary guiding device is also mounted on the frame, and takes the form of a guide plate 17, which guides the mown crop which is rearwardly discharged from between adjacent pairs of mower discs 12, and into working contact with the tips of the tines 15.

Evidently, the mown crop which is rearwardly discharged by the mower discs 12, takes the form of four separate and narrowed streams 13, and which would (in the absence of the invention) be applied to the cylindrical outer surface defined by the tips of the working elements 15 in non-uniform manner i.e. whereby less than 100% of the conditioning surface would be utilised in order to condition the grass, and the concentrated streams 13 could exercise excessive drag load between each stream of grass and the guide plate arrangement 17 and the tips of the rotating conditioning elements 15.

However, the stationary guide plate 17 includes a diverting arrangement, shown schematically by references 18, which are operative to distribute the streams of mown crop 13 laterally of the direction of travel P, so as to be received substantially throughout the length of the conditioning device 14.

Therefore, the streams 13 (which together have combined widths of less than the overall length of the cutter bar 11 and the conditioning device 14) are spread out laterally so as to be distributed substantially uniformly throughout the cylindrical surface defined by the tips of the working elements 15 of the conditioning device 14. This achieves more efficient utilisation of the conditioning surface, but also reduces the thickness of the streams of grass supplied to the conditioner whereby (a) frictional drag forces will be reduced and (b) more of the grass will be exposed to working action.

The diverting arrangement 18 may comprise simple V-shaped guide plates, provided on the underside of the guide plate arrangement 17, so as to effect required lateral separation of the material in each stream 13.

To provide an additional conditioning action, it is preferred, as shown in Figure 1, to provide a second conditioning device which is rotatably mounted on the frame, and which is designated generally by reference 19. The conditioning device 19 preferably comprises a rotating brush type of conditioner, having outwardly extending bristles 20, which apply a more gentle type of "conditioning" action on the crop.

Preferably, the guide plate arrangement 17 is projected rearwardly, in undulating manner as shown in Figure 1, so as also to co-operate with, and overlie at least part of the circumference of the second conditioning device 19, with the rearward projection of the guide plate arrangement being shown by reference 21.

In order to provide a further lateral separation of the crop material, prior to being further conditioned, a second diverting arrangement may be provided, and comprising profiled ribs 22, provided on the underside of the cover plate arrangement.

The preferred embodiment, shown in Figures 1 and 2, therefore has first and second rotary conditioning devices 14, 19, with a common guide or holding plate arrangement co-operating therewith (17, 21), and in which a first diverting arrangement 18 is arranged at the upstream end of the guide plate arrangement 17, whereas the second diverting arrangement (formed by profiled ribs 22) is also arranged on the underside of the guide plate arrangement 17 where it overlies the first conditioning device 14.

The preferred embodiment of agricultural machine according to the invention, as shown in the drawings, comprises an integrated mower / conditioner. However, it should be understood that the invention may be applied to a crop conditioner per se, which would be operated as a separate piece of equipment, to pick-up swaths of mown crop having been formed previously by a mower during a separate operation.

Also, while it is preferred that the crop conditioning machine has first and second rotary, conditioning devices, it is a minimum aspect of the invention to provide one crop conditioning device only, provided that there is at least one, and preferably two separate diverter arrangements, in order to spread the streams of mown crop (being supplied to the conditioning device) laterally so as to increase the area of contact between the mown crop and the cylindrical surface of the crop conditioner defined by the rotating tips of the conditioning elements.

## Claims

1. An agricultural machine (10) for conditioning a mown crop supplied in at least one stream (13) to the machine, in which the machine is intended to be mounted behind a propelling vehicle in order to apply a working action to the mown crop supplied thereto, so as to condition the crop, prior to discharging the conditioned crop on to the ground, and in which the machine comprises:
a frame;
a rotatable conditioning device (14) extending transversely of the direction of travel P and rotatably mounted on the frame to rotate about an axis which extends generally parallel to the surface of the ground over which the machine is travelling, said conditioner device (14) having working elements (15) extending outwardly of said axis and operative to make working contact with the crop when supplied thereto; and,
a stationary guiding device (17) mounted on the frame and arranged to guide mown crop (13) into working contact with the working elements (15) of the conditioning device (14);
characterised in that the guiding device (17) includes a diverting arrangement (18) which is operative to distribute the mown crop (13) laterally of the direction of travel P so as to be received substantially throughout the length of the conditioning device (14).

2. An agricultural machine according to claim 1, in which the conditioning device (14) comprises a rotor (16) having rigid tines (15) extending outwardly of the axis of the rotor.

3. An agricultural machine according to claim 1 or 2, in which the stationary guiding device (17) comprises a guide plate extending over the conditioning device (14).

4. An agricultural machine according to claim 3, in which the diverting arrangement comprises shaped guides (18) on the underside of the plate (17), which act to spread the mown crop laterally.

5. An agricultural machine according to claim 4, in which each shaped guide comprises a V-shaped guide (18).

6. An agricultural machine according to any one of claims 1 to 5, including a second conditioning device (19) mounted on the frame so as to receive partly conditioned grass from the first conditioning device (14), said second conditioning device (19) being rotatably mounted and extending substantially throughout the width of the machine (10).

7. An agricultural machine according to claim 6, in which the stationary guiding device (17) extends also over the second conditioning device (19) via a rearward extension (21) of the guide plate.

8. An agricultural machine according to claim 7, in which a second diverting arrangement (22) is provided on the underside of the guide plate arrangement (17), downstream of the first diverting arrangement (18), to further spread the mown crop laterally.

9. An agricultural machine according to claim 8, in which the second diverting arrangement comprises profiled ribs (22) provided on the underside of the guide plate (17).

10. An agricultural machine according to any one of claims 6 to 9, in which the second conditioning device (19) comprises a cylindrical brush having outwardly extending bristles (20).

11. An agricultural machine according to any one of the preceding claims, and constituted by a rotatable crop conditioning device.

12. An agricultural machine according to any one of claims 1 to 10, in which the agricultural machine is incorporated in an integrated mower / conditioner.
